# EUROPEAN PATENT SPECIFICATION

(11) **EP 2 999 308 B1**
(45) Date of publication and mention of the grant of the patent: **31.08.2016**
(21) Application number: 15184394.3
(22) Date of filing: 09.09.2015
(51) Int. Cl.: H05B 6/06, F24H 1/10, F16L 53/00, H05B 6/10, H05B 6/44

(54) **FLUID HEATING DEVICE**
FLÜSSIGKEITSERHITZUNGSVORRICHTUNG
DISPOSITIF DE CHAUFFAGE DE LIQUIDE

(30) Priority: 19.09.2014 JP 2014192019; 27.10.2014 JP 2014217985
(43) Date of publication of application: 23.03.2016
(73) Proprietor: Tokuden Co., Ltd., Kyoto-shi Kyoto 607-8345 (JP)
(72) Inventor: TONOMURA, Toru, Kyoto-shi, Kyoto 607-8345 (JP); FUJIMOTO, Yasuhiro, Kyoto-shi, Kyoto 607-8345 (JP); KIMURA, Masayoshi, Kyoto-shi, Kyoto 607-8345 (JP)
(74) Representative: Horn Kleimann Waitzhofer Patentanwälte PartG mbB

(56) References cited:
- WO-A1-97/12496
- CH-A- 216 899
- GB-A- 2 105 159
- US-A- 4 855 552

## Description

### FIELD OF THE ART

This invention relates to a fluid heating device that applies heat to a fluid that flows in a conductor tube of a helical shape by applying induction heat or electrical heat to the conductor tube.

### BACKGROUND ART

Conventionally known is a fluid heating device as shown in the patent document 1 wherein a plurality of rounds of a helical conventional tube to form a secondary coil are electrically connected by the use of an electrical connecting member that extends in an axial direction of the helical shape by means of welding or the like so as to constitute a short circuit so that an electrical reactance is reduced and a heating efficiency is improved.

If induction heat is applied to the helical conductor tube, a bigger electric current flows in an inner circumference side of the conductor tube whose length is shorter and whose electrical resistivity is lower than in an outer circumference side thereof, a temperature in the inner circumference side becomes higher than that in the outer circumference side. As a result of this, thermal expansion becomes bigger in the inner circumference side of the conductor tube than in the outer circumference side so that a mutual disposition of the conductor tube changes in a direction of unwinding the helical shape of the conductor tube.

In addition, since a temperature of an exit side of the fluid becomes higher than that of an entrance side, a diameter in the exit side becomes bigger so that a shape of the helical conductor tube viewed from a front direction changes to a trapezoid shape.

However, if the electrical connecting member is fixed to required positions of the conductor tube similar to the conventional fluid heating device, a big stress generates when the conductor tube is about to change its shape and a long term use may cause accumulation of fatigue or breakage for the electrical connecting member or at a portion where the conductor tube is fixed to the electrical connecting member.

In that case, there might be not only a drop in the heating efficiency but also a leakage of the heated fluid inside of the conductor tube because the conductor tube itself is broken due to an electric discharge by a potential caused between the connected portions.

### PRIORART DOCUMENTS

### Patent Document

Patent document 1: Japanese Unexamined Patent Application Publication No. 2010 - 71624 WO 97/12496 discloses a fluid heating device according to the preamble portion of claim 1.

### DISCLOSURE OF THE INVENTION

### PROBLEMS TO BE SOLVED BY THE INVENTION

The present claimed invention is to detect the breakage of the conductor tube before it happens and to prevent leakage of the heated fluid.

### MEANS TO SOLVE THE PROBLEMS

More specifically, a fluid heating device in accordance with this invention is a fluid heating device that applies heat to a fluid that flows in a conductor tube of a helical shape by applying induction heat to the conductor tube, and is characterized by comprising an electrical connecting member that constitutes a short circuit by electrically connecting each of required portions of the conductor tube and a potential measuring instrument that measures a potential of the conductor tube.

In accordance with this arrangement, in case that the potential detected by the potential measuring instrument exceeds a predetermined value, it is possible to notice that something is wrong with the electrical connecting member. As a result of this, it is possible to take a suitable measure such as maintenance of the device or exchanging the device before the conductor tube is broken.

In order to conduct the maintenance more securely, in case that the potential measured by the potential measuring instrument exceeds the predetermined value, it is preferable to further comprise a notification part that notifies that the measured potential exceeds the predetermined value or a driving halt part that outputs a driving halt signal.

In order to reduce generation of stress that is a root cause of breakage of the conductor tube and to prolong the life of the device, it is preferable that the electrical connecting member is transformable in accordance with a transformation of the conductor tube resulting from a temperature change of the conductor tube.

As a preferable embodiment of the electrical connecting member represented is the electrical connecting member that is formed by the use of a metal mesh. In accordance with this arrangement, since the metal mesh easily transforms not only in the longitudinal direction but also in the transverse direction, it is possible to sufficiently cope with a contingent transformation of the conductor tube.

As a further different preferable embodiment of the electrical connecting member represented is the electrical connecting member that is formed by the use of a metal plate whose middle area provided is a folding process. In accordance with this arrangement, it is possible easily not only to provide mobility but also to secure a large conduction cross-sectional area.

In case that the conductor tube produces superheated vapor by applying heat to the fluid, since the temperature rise is big so that the conductor tube transforms largely, the effect of this invention is especially remarkable.

### EFFECT OF THE INVENTION

In accordance with this invention having the above-mentioned arrangement, in case that the potential detected by the potential measuring instrument exceeds a predetermined value, it is possible to notice that something is wrong with the electrical connecting member. As a result of this, it is possible to take a suitable measure such as maintenance of the device or exchanging the device before the conductor tube is broken.

### BRIEF DESCRIPTION OF THE DRAWINGS

Fig. 1 is a front view mainly showing a conductor tube of a fluid heating device in accordance with one embodiment of this invention.
Fig. 2 is a side view mainly showing the conductor tube of this embodiment.
Fig. 3 is a front view, a bottom view and a side view showing an electrical connecting member of this embodiment.
Fig. 4 is a front view, a bottom view and a side view showing the electrical connecting member of another embodiment of this invention.
Fig. 5 is a front view showing a fluid heating device in accordance with a further different embodiment of this invention.
Fig. 6 is a front view showing a fluid heating device in accordance with a further different embodiment of this invention.

### BEST MODES OF EMBODYING THE INVENTION

One embodiment of a fluid heating device 100 in accordance with this invention will be explained with reference to drawings.

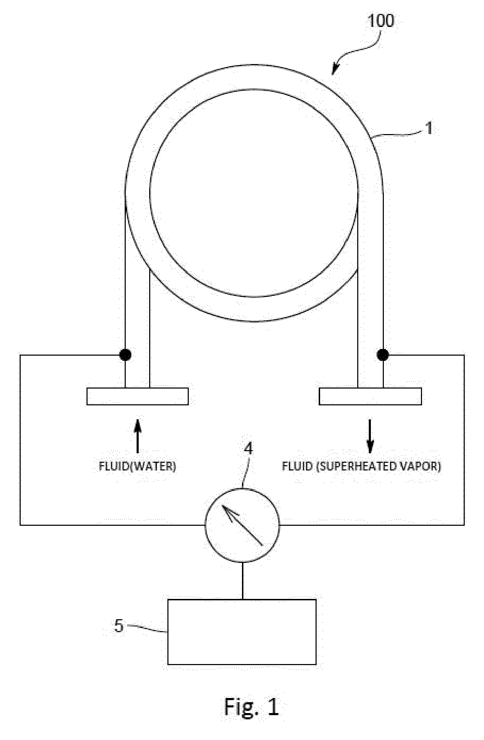

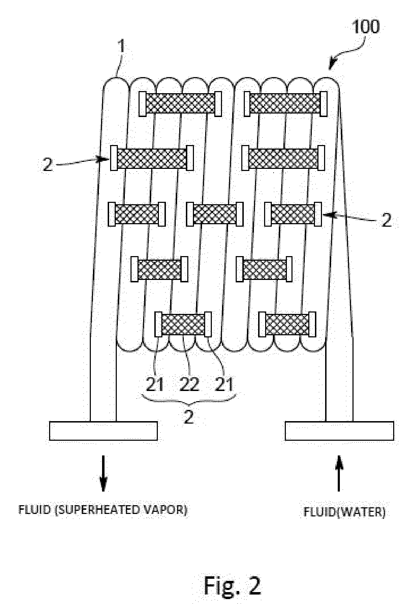

The fluid heating device 100 has a primary coil (not shown in drawings) that winds around an iron core and a secondary coil (refer to Fig. 1 and Fig. 2) comprising a helical conductor tube 1 that winds along the primary coil around an outer surface or an inner surface of the primary coil or between the primary coils, and applies heat to a fluid that circulates inside of the conductor tube 1 that constitutes the secondary coil by means of inducting heating of the conductor tube 1. On one end part of the conductor tube 1 that constitutes the secondary coil formed is an introduction port to which an outer pipe to supply the secondary coil with the fluid is connected. On the other end part of the conductor tube 1 formed is a discharge port to which the outer pipe to discharge the heated fluid outside is connected.

The fluid heating device 100 applies heat to water as the fluid, and is used as a superheated vapor producing device that produces a superheated vapor whose temperature is 100°C or more (200°C ∼ 2000°C) by applying heat to the water by means of the conductor tube 1, however, the temperature to be heated or an object fluid to be heated is not limited to this. For example, the superheated vapor may be produced by applying heat to a saturated vapor produced outside by the use of the conductor tube 1.

As shown in Fig. 2, in this embodiment provided is an electrical connecting member 2 that constitutes a short circuit by electrically connecting each of the predetermined portions of the conductor tube 1.

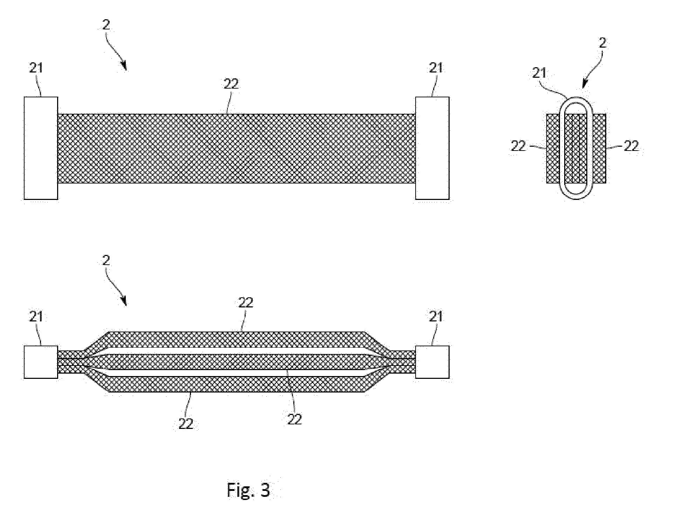

The electrical connecting member 2 is, as shown in Fig. 3, made of a metal in an elongated shape, and comprises a pair of terminal plates for connection 21 that are both electrically and mechanically adhered to the conductor tube 1 by means of welding or brazing and a metal mesh 22 that bridges over the terminal plates for connection 21. The above-mentioned a pair of the terminal plates for connection 21 are both electrically and mechanically adhered to an outer circumferential part of the secondary coil of the conductor tube 1 by means of welding or the like. In addition, the metal mesh 22 stretches in accordance with a change of a distance between the terminal plates for connection 21. In this embodiment, the metal mesh 22 is in a shape of a belt that is bent in the middle and a plurality of (three in Fig. 3) the metal meshes 22 bridge over the terminal plates for connection 21.

A plurality of (more than three in this embodiment) the electrical connecting members 2 are mounted on a surface of the conductor tube 1 in a posture wherein an extending direction of the electrical connecting member 2 is parallel to an axial direction of the helical shape. It is preferable that a plurality of the electrical connecting members 2 are mounted separately at intervals each other over the whole outer circumference of the secondary coil. In Fig. 2, two or three electrical connecting members 2 are mounted linearly along the axial direction of the helical shape. In addition, the terminal plate for connection 21 of each electrical connecting member 2 does not connect an adjacent conductor tube element (a part constituting one round of the helical shape of the conductor tube 1) but is mounted on a predetermined position of a conductor tube element that locates in a position that is separated by two or more so as to electrically connect the conductor tube elements. This is because it is difficult to connect the conductor tubes adjacent to each other in view of the space because the helical diameter of the conductor tube element is small in this embodiment. As mentioned above, the electrical connecting members 2 are mounted so as to enable a desired electrical connection by connecting the conductor tube elements that are adjacent to each other or separated to each other.

Both heat resistant and hardly oxidizable austenitic stainless steel such as SUS304 or SUS316L and INCONEL-alloy (JIS alloy number NCF601 or the like) are suitable as a material of the terminal plate for connection 21 or the metal mesh 22.

Furthermore, as shown in Fig. 1, in this embodiment provided are a potential measuring instrument (a voltmeter) 4 that measures a potential between an inlet of the conductor tube 1 and an outlet thereof (more accurately, a potential between any two points locating in an end part side from an area where the electrical connecting member 2 is arranged on the conductor tube 1) and a monitor device 5 that has a notification part that issues a warning when a potential measured by the potential measuring instrument 4 exceeds a predetermined value and/or a driving halt part that outputs a driving halt signal. The potential measuring instrument 4 in this embodiment is so connected as to measure the electrical potential between an introducing port or its adjacent of the conductor tube 1 and a discharging port or its adjacent of the conductor tube 1.

For example, if a number of turns of the input winding for induction heating is N and an applied voltage to the input winding is E, an electric voltage between an entrance and an exit of the fluid as being a beginning and an end of the conductor tube 1 is E/N in a state that the conductor tube 1 is in a complete short circuit. Considering a case that a part of the electrical connecting member 2 is broken and out of place, an electric voltage of 2E/N is generated between the beginning and the end of the conductor tube 1.

In this embodiment, since the change of the electric potential can be notified by issuing the alarm or outputting the driving halt signal so as to inform necessity of repair, it is possible to prevent breakage of the conductor tube 1 itself before it happens.

Furthermore, in accordance with this arrangement, since the electrical connecting member 2 transforms in accordance with a transformation of the conductor tube 1 resulting from the temperature change of the conductor tube 1, there is no chance of generating a big stress for the conductor tube 1 or the electrical connecting member 2 itself or at a portion where the conductor tube 1 is fixed to the electrical connecting member 2 and it is possible to prevent accumulation of fatigue, resulting in prevention of breakage as much as possible. As a result of this, it becomes possible to elongate a repair cycle and a life of the device.

In addition, since the electrical connecting member 2 is made of the metal mesh 22 that is easily transformable not only in the longitudinal direction but also in the transverse direction, it becomes possible to sufficiently cope with contingent transformation of the conductor tube 1.

Especially, since the heating temperature to produce the superheated vapor is high so that the conductor tube 1 transforms largely in this embodiment, the above-mentioned effect is especially remarkable.

This invention is not limited to the above-mentioned embodiment.

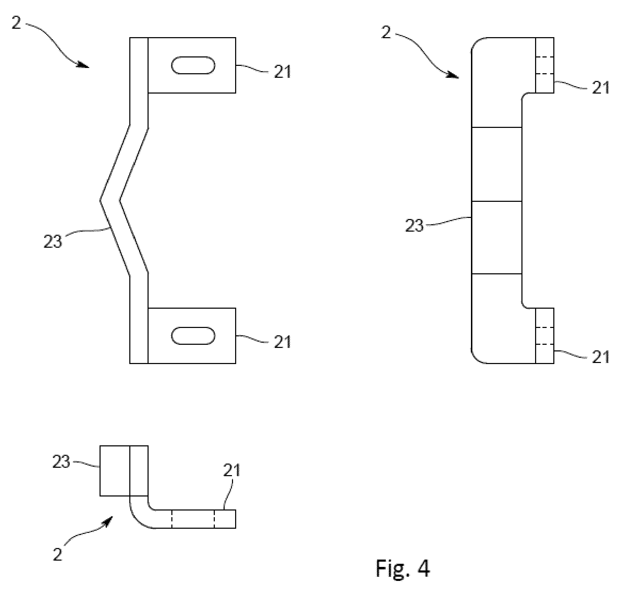

For example, the electrical connecting member 2 may be formed, as shown in Fig. 4, by the use of a metal plate 23 with which a folding process is provided between the terminal plates for connections 21. As the metal plate 23 with which the folding process is provided conceived is a metal plate with which a bending process is provided or a metal plate with which a curving process is provided. In accordance with this arrangement, it is possible to both give transformability to the metal plate and secure a big cross-sectional area of conductivity. It is preferable that a material of the metal plate 23 is the same as that of the above-mentioned metal mesh.

In addition, it is preferable that a cross-sectional area and a number of connection of the electrical connecting member are set based on a value of an electric current that flows in the electrical connecting member for every portion where the electrical connecting member is mounted. The electric current value that flows in each of the electrical connecting member largely differs depending on a state of a magnetic coupling with an input side winding or due to a difference of impedance. If the cross-sectional area and the number of connection of the electrical connecting member are set in accordance with the electric current value, it is possible both to prevent excessive heating and to avoid selecting an excess cross-sectional area and the number of connection.

Furthermore, the electrical connecting member in the above-mentioned embodiment is mounted in a posture with its extending direction parallel to the axial direction of the helical shape, in other words along the axial direction of the helical shape, however, the electrical connecting member may be mounted in a posture with its extending direction displaced from the axial direction of the helical shape. For example, the electrical connecting member may be mounted in a posture with its extending direction leaning from the axial direction of the helical shape within ±45 degree (more preferably within ±10 degree).

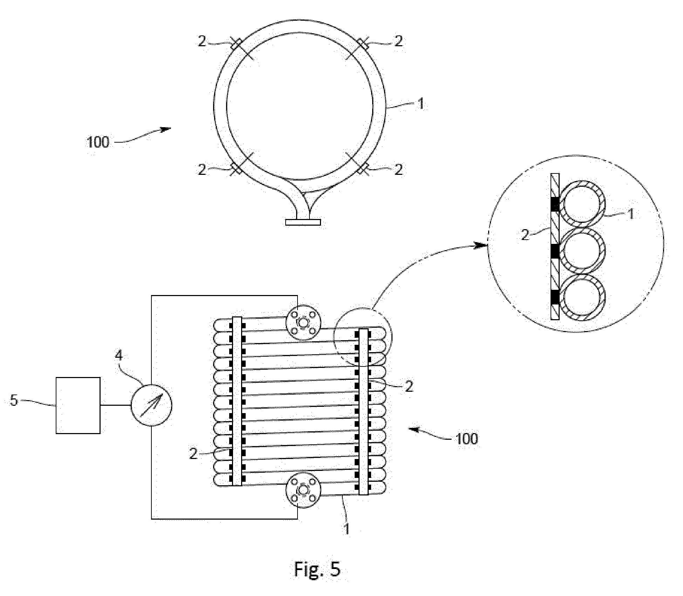

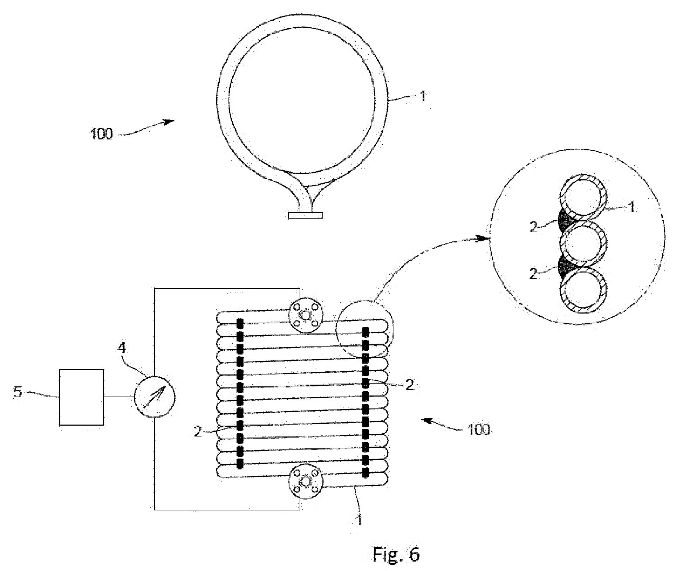

In addition, the electrical connecting member 2 is not only sufficiently transformable but also may be a metal plate 2 of a welding part 2 that connects each of the conductor tubes 1 as shown in Fig. 5 and Fig. 6.

The electrical connecting member 2 shown in Fig. 5 is arranged from one end to the other end along the axial direction of he helical shape on the outer circumference of the helical conductor tube 1. In addition, the electrical connecting member 2 is arranged at each of four portions separated by the same distance each other in a circumferential direction of the helical conductor tube 1. Each of the electrical connecting member 2 is fixed to all of the conductor tube elements from one end to the other end in the axial direction of the helical shape by means of welding or brazing. In accordance with this arrangement, the conductor tube 1 that winds in the helical shape is in a complete short circuit state wherein all of the conductor tube elements are short-circuited.

The electrical connecting member 2 shown in Fig. 6 consists of a welding part or a brazing part that connects the conductor tube elements each of which is adjacent. The welding part or the brazing part is formed along the axial direction of the helical shape in the outer circumference of the conductor tube 1 that winds in the helical shape. In addition, the welding part or the brazing part is arranged at each of four portions separated by the same distance each other in a circumferential direction of the helical conductor tube 1. The welding part of the brazing part is formed between one end and the other end in the axial direction of the helical shape over all of the conductor tube element. In accordance with this arrangement, the conductor tube 1 that winds in the helical shape is in a complete short circuit state wherein all of the conductor tube elements are short-circuited.

It is understood that the wording relating to a device performing an action in the present tense, e.g. a fluid heating device that applies heat to a fluid, is to be construed as a device being adapted or implemented to perform the action, e.g. a fluid heating device adapted to heat a fluid.

### EXPLANATION OF CODE

- 100: fluid heating device
- 1: conductor tube
- 2: electrical connecting member
- 5: alarm device (notification part)
- 5: alarm device (driving halt part)

## Claims

1. A fluid heating device (100) adapted to apply heat to a fluid that flows in a conductor tube (1) having a helical shape by applying induction heat to the conductor tube (1), comprising
an electrical connecting member (2) that constitutes a short circuit by electrically connecting each of required portions of the conductor tube (1) and being **characterized by** a potential measuring instrument (4) for measuring a potential of the conductor tube (1).

2. The fluid heating device (100) described in claim 1, further comprising
a notification part (5) that notifies that the potential measured by the potential measuring instrument (4) exceeds a predetermined value or a driving halt part that outputs a driving halt signal in case that the measured potential exceeds the predetermined value.

3. The fluid heating device (100) described in claim 1 or 2, wherein
the electrical connecting member (2) is transformable in accordance with a transformation of the conductor tube (1) resulting from a temperature change of the conductor tube (1).

4. The fluid heating device (100) described in any one of claims 1 - 3, wherein
the conductor tube (1) generates superheated vapor by applying heat to the fluid.

5. The fluid heating device (100) described in any one of claims 1 - 4, wherein
the conductor tube (1) is implemented to guide a liquid and/or gas at temperatures between 100°C and 200°C.

6. The fluid heating device (100) described in any one of claims 1 - 4, wherein
the conductor tube (1) is implemented to guide a liquid and/or gas at temperatures between 100°C and 1000°C.

7. The fluid heating device (100) described in any one of claims 1 - 4, wherein
the conductor tube (1) is implemented to guide a liquid and/or gas at temperatures between 100°C and 2000°C.

8. The fluid heating device (100) described in any one of claims 1 - 7, wherein
the heating device (100) comprises a plurality of electrical connecting members (2), and each connecting member (2) electrically bridges portions of the conductor tube (1), wherein the portions are assigned different windings of the conduction tube (1).

9. A heating arrangement comprising:
a primary coil;
a secondary coil having an axial direction and a transverse direction; and
a fluid heating device (100) according to anyone of claims 1-8;
wherein the conductor tube (1) of helical shape comprises the secondary coil, and wherein the electrical connecting member (2) bridges windings of the secondary coil thereby extending along the axial direction of the secondary coil.

10. The heating arrangement of claim 9, wherein the electrical connecting member (2) comprises at least two terminal plates (21) attached to the conductor tube (1) and a flexible electrically conducting member.

11. The heating arrangement of claim 10, wherein the electrically conducting member comprises a metal mesh (22), folded metal sections (23) and/or a bent metal plate (23).

12. The heating arrangement of any one of claims 9 - 11, comprising a plurality of electrical connecting members (2), wherein the number of the connecting members (2) and a cross-section of each of the connecting members (2) are adapted as a function of an electric current flowing through the secondary coil.

13. The heating arrangement of claim 12, wherein the plurality of electrical connecting members (2) are placed at an outside circumferential face of the secondary coil.

14. The heating arrangement of any one of claims 12 or 13, wherein the plurality of electrical connecting members (2) are implemented to electrically short-circuit an inlet and an outlet of the conductor tube (1).

15. The heating arrangement of any one of claims 9 -14, wherein the potential measurement instrument (4) is implemented to detect an increase of a voltage between an inlet and an outlet of the conductor tube (1).

## Patentansprüche

1. Fluidheizvorrichtung (100) welche dazu eingerichtet ist, ein Fluid zu erhitzen, welches in einer leitfähigen Röhre (1) in Form einer Helix fließt, indem die leitfähige Röhre (1) mit Induktionswärme beaufschlagt wird, aufweisend:
ein elektrisches Verbindungsteil (2), welches einen Kurzschlusskontakt herstellt, indem es jeden der dazu nötigen Abschnitte der leitfähigen Röhre (1) untereinander elektrisch verbindet; und
**dadurch gekennzeichnet, dass** ein Potentialmessinstrument (4) zum Messen eines Potentials der leitfähigen Röhre (1).

2. Fluidheizvorrichtung (100) gemäß Anspruch 1, ferner aufweisend
eine Meldeeinrichtung (5), welche meldet, wenn das von dem Potentialmessinstrument (4) gemessene Potential einen vorgegebenen Schwellwert überschreitet oder eine Unterbrechungseinrichtung, die ein Unterbrechungssignal ausgibt, wenn das gemessene Potential den vorgegebenen Schwellwert überschreitet.

3. Fluidheizvorrichtung (100) gemäß Anspruch 1 oder 2, wobei
das elektrische Verbindungsteil (2) verformbar ist, entsprechend einer Verformung der leitfähigen Röhre (1) aufgrund einer Temperaturänderung der leitfähigen Röhre (1).

4. Fluidheizvorrichtung (100) gemäß einem der Ansprüche 1- 3, wobei
die leitfähige Röhre (1) durch das Erhitzen des Fluids überhitzten Dampf erzeugt.

5. Fluidheizvorrichtung (100) gemäß einem der Ansprüche 1 - 4, wobei
die leitfähige Röhre (1) dazu eingerichtet ist, eine Flüssigkeit und/oder ein Gas bei einer Temperatur zwischen 100°C und 200°C zu führen.

6. Fluidheizvorrichtung (100) gemäß einem der Ansprüche 1- 4 wobei
die leitfähige Röhre (1) dazu eingerichtet ist, eine Flüssigkeit und/oder ein Gas bei einer Temperatur zwischen 100°C und 1000°C zu führen.

7. Fluidheizvorrichtung (100) gemäß einem der Ansprüche 1 - 4, wobei
die leitfähige Röhre (1) dazu eingerichtet ist, eine Flüssigkeit und/oder ein Gas bei einer Temperatur zwischen 100°C und 2000°C zu führen.

8. Fluidheizvorrichtung (100) gemäß einem der Ansprüche 1- 7, wobei
die Heizvorrichtung (100) mehrere elektrische Verbindungsteile (2) umfasst, wobei jedes Verbindungsteil (2) Abschnitte der leitfähigen Röhre (1) elektrisch überbrückt, wobei die Abschnitte unterschiedlichen Windungen der leitfähigen Röhre (1) zugewiesen sind.

9. Heizungsanordnung aufweisend:
eine erste Spule;
eine zweite Spule mit einer axialen und einer transversalen Richtung; und
eine Fluidheizvorrichtung (100) gemäß einem der Ansprüche 1 - 8, wobei die leitfähige Röhre (1) in Form einer Helix die zweite Spule umfasst und wobei das elektrische Verbindungsteil (2) Windungen der zweiten Spule überbrückt und sich entlang der axialen Richtung der zweiten Spule erstreckt.

10. Heizungsanordnung gemäß Anspruch 9, wobei das elektrische Verbindungsteil (2) zumindest zwei Endstücke (21) aufweist, die mit der leitfähigen Röhre (1) und mit einem flexiblen elektrisch leitfähigen Teil verbunden sind.

11. Heizungsanordnung gemäß Anspruch 10, wobei das elektrisch leitende Teil ein Metallnetz (22), faltbare Metallbereiche (23) und/oder ein biegsames Metallblech (23) umfasst.

12. Heizungsanordnung gemäß einem der Ansprüche 9 - 11, aufweisend mehrere elektrische Verbindungsteile (2), wobei die Anzahl der elektrischen Verbindungsteile (2) und eine Querschnittsfläche von jedem der elektrischen Verbindungsteile (2) in Abhängigkeit eines elektrischen Stroms, der durch die zweite Spule fließt, ausgewählt sind.

13. Heizungsanordnung gemäß Anspruch 12, wobei die elektrischen Verbindungsteile (2) an einer außenliegenden umlaufenden Fläche der zweiten Spule angeordnet sind.

14. Heizungsanordnung gemäß Anspruch 12 oder 13, wobei die elektrischen Verbindungsteile (2) dazu eingerichtet sind, einen Einlass und einen Auslass der leitfähigen Röhre (1) elektrisch kurz zu schließen.

15. Heizungsanordnung gemäß einem der Ansprüche 6 - 14, wobei das Potentialmessinstrument (4) dazu eingerichtet ist, einen Spannungsanstieg zwischen einem Einlass und einem Auslass der leitfähigen Röhre (1) zu erkennen.

## Revendications

1. Dispositif de chauffage de liquide (100) adapté pour appliquer de la chaleur à un fluide qui s'écoule dans un tube conducteur (1) présentant une forme hélicoïdale, en appliquant une chaleur par induction au tube conducteur (1), comprenant :
un élément de connexion électrique (2) qui constitue un court-circuit en connectant électriquement chacune des parties requises du tube conducteur (1) et étant **caractérisé par** un instrument de mesure de potentiel (4) pour mesurer un potentiel du tube conducteur (1).

2. Dispositif de chauffage de liquide (100) selon la revendication 1, comprenant en outre :
un élément de notification (5) qui notifie que le potentiel mesuré par l'instrument de mesure de potentiel (4) dépasse une valeur prédéterminée ou une pièce d'arrêt d'entraînement qui sort un signal d'arrêt de l'entraînement dans le cas où le potentiel mesuré dépasse la valeur prédéterminée.

3. Dispositif de chauffage de liquide (100) selon la revendication 1 ou 2, dans lequel l'élément de connexion électrique (2) est transformable conformément à une transformation du tube conducteur (1) résultant d'un changement de température du tube conducteur (1).

4. Dispositif de chauffage de liquide (100) selon une quelconque des revendications 1 à 3, dans lequel
le tube conducteur (1) génère de la vapeur surchauffée en appliquant de la chaleur au fluide.

5. Dispositif de chauffage de liquide (100) selon une quelconque des revendications 1 à 4, dans lequel
le tube conducteur (1) est mis en oeuvre pour guider un liquide et/ou un gaz à des températures comprises entre 100 °C et 200 °C.

6. Dispositif de chauffage de liquide (100) selon une quelconque des revendications 1 à 4, dans lequel
le tube conducteur (1) est mis en oeuvre pour guider un liquide et/ou un gaz à des températures comprises entre 100 °C et 1 000 °C.

7. Dispositif de chauffage de liquide (100) selon une quelconque des revendications 1 à 4, dans lequel
le tube conducteur (1) est mis en oeuvre pour guider un liquide et/ou un gaz à des températures comprises entre 100 °C et 2 000 °C.

8. Dispositif de chauffage de liquide (100) selon une quelconque des revendications 1 à 7, dans lequel
le dispositif de chauffage (100) comprend une pluralité d'éléments de connexion électrique (2), et chaque élément de connexion (2) ponte électriquement des parties du tube conducteur (1), dans lequel les partie sont affectées à différents enroulements du tube conducteur (1).

9. Agencement de chauffage comprenant :
une bobine primaire ;
une bobine secondaire présentant une direction axiale et une direction transversales ; et
un dispositif de chauffage de liquide (100) selon une quelconque des revendications 1 à8;
dans lequel le tube conducteur (1) de forme hélicoïdale comprend la bobine secondaire, et
dans lequel l'élément de connexion électrique (2) ponte des enroulements de la bobine secondaire pour ainsi s'étendre le long de la direction axiale de la bobine secondaire.

10. Agencement de chauffage selon la revendication 9, dans lequel l'élément de connexion électrique (2) comprend au moins deux plaques à bornes (21) attachées au tube conducteur (1) et un élément électriquement conducteur flexible.

11. Agencement de chauffage selon la revendication 10, dans lequel l'élément électriquement conducteur comprend une maille métallique (22), des sections métalliques pliées (23) et/ou une plaque de métal courbée (23).

12. Agencement de chauffage selon une quelconque des revendications 9 à 11, comprenant une pluralité d'éléments de connexion électrique (2), dans lequel le nombre d'éléments de connexion (2) et une section transversale de chacun des éléments de connexion (2) sont adaptés en fonction d'un courant électrique s'écoulant à travers la bobine secondaire.

13. Agencement de chauffage selon la revendication 12, dans lequel la pluralité d'éléments de connexion électrique (2) sont placés au niveau d'une face circonférentielle extérieure de la bobine secondaire.

14. Agencement de chauffage selon une quelconque des revendications 12 ou 13, dans lequel la pluralité d'éléments de connexion électrique (2) sont mis en oeuvre pour court-circuiter électriquement une entrée et une sortie du tube conducteur (1).

15. Agencement de chauffage selon une quelconque des revendications 9 à 14, dans lequel l'instrument de mesure de potentiel (4) est mis en oeuvre pour détecter une augmentation d'une tension entre une entrée et une sortie du tube conducteur (1).
